# EUROPÄISCHE PATENTSCHRIFT

(11) **EP 3 344 835 B1**
(45) Veröffentlichungstag und Bekanntmachung des Hinweises auf die Patenterteilung: **03.04.2019**
(21) Anmeldenummer: 16766218.8
(22) Anmeldetag: 05.09.2016
(51) Int. Cl.: E05D 3/18

(54) **SCHARNIER UND VERKLEIDUNG MIT SCHARNIER**
HINGE AND CLADDING WITH A HINGE
CHARNIÈRE ET REVÊTEMENT MUNI D'UNE CHARNIÈRE

(30) Priorität: 04.09.2015 AT 507552015
(43) Veröffentlichungstag der Anmeldung: 11.07.2018
(73) Patentinhaber: FACC AG, 4910 Ried im Innkreis (AT)
(72) Erfinder: KONRAD, Wilfried, 4942 Gurten (AT)
(74) Vertreter: Sonn & Partner Patentanwälte
(86) Internationale Anmeldenummer: PCT/AT2016/060049
(87) Internationale Veröffentlichungsnummer: WO 2017/035553

(56) Entgegenhaltungen:
- EP-A1- 1 857 624
- AU-B2- 431 315
- CH-A- 411 302

## Beschreibung

Die Erfindung betrifft ein Scharnier zur gelenkigen Verbindung eines ersten Bauteils mit einem zweiten Bauteil, mit einem ersten Scharnierteil zur Befestigung an dem ersten Bauteil und mit einem zweiten Scharnierteil zur Befestigung an dem zweiten Bauteil, mit einem ersten Schwenkbügel, welcher eine erste Gelenkachse an dem ersten Scharnierteil und eine zweite Gelenkachse an dem zweiten Scharnierteil aufweist, wobei der erste Scharnierteil eine Längsführung für die erste Gelenkachse des ersten Schwenkbügels aufweist und mit einem zweiten Schwenkbügel, welcher eine erste Gelenkachse an dem ersten Scharnierteil und eine zweite Gelenkachse an dem zweiten Scharnierteil aufweist, wobei der zweite Scharnierteil eine weitere Längsführung für die zweite Gelenkachse des zweiten Schwenkbügels aufweist.

Weiters betrifft die Erfindung eine Verkleidung für einen Flugzeuginnenraum, mit einem Verkleidungselement und mit einem Klappenelement, welche über ein Scharnier miteinander verbunden sind.

Im Stand der Technik sind solche Scharniere seit längerem bekannt. Durch die verschiebliche Lagerung einer der beiden Gelenkachsen des Schwenkbügels kann der beim Schwenkvorgang gebildete Spalt zwischen den Scharnierteilen reduziert werden. Dieses Scharnier kann insbesondere bei Flugzeugtischen eingesetzt werden.

CH 411 302 beschreibt eine Tür oder ein Fenster mit Scharnieren entsprechend dem Oberbegriff des unabhängigen Anspruchs 1. In der AU 431,315 B2 wird ein Scharnier zur Verbindung eines Fensters mit einem Fensterrahmen beschrieben, welches zwei Scharniergehäuse aufweist, an denen zwei Sätze von gleichartigen Schwenkarmen gelagert sind. Die Schwenkarme sind um eine gemeinsame Schwenkachse miteinander verbunden. Die einen Enden der Schwenkarme sind um eine ortsfeste Schwenkachse am Scharniergehäuse gelagert, wohingegen die anderen Enden der Schwenkarme um eine verschiebliche Schwenkachse am Scharniergehäuse gelagert sind. Die beweglichen Enden der Schwenkarme sind in Nylonblöcken aufgenommen, womit die Schwenkbewegung mittels Reibschluss gebremst wird. Darüber hinaus wird eine Möglichkeit dargestellt, die Reibkräfte zwischen den Schwenkarmen und den Nylonblöcken einzustellen.

Nachteiligerweise kann bei der AU 431,315 B2 die Reibkraft zwischen den Schwenkarmen und den Nylonblöcken nur seitlich mit Hilfe der Schraube eingestellt werden. Wenn das Scharnier der AU 431,315 B2 vollständig verbaut würde, wäre eine nachträgliche Änderung der Reibkraft nicht mehr bzw. nur mit großem Aufwand möglich. Dazu müsste das Scharnier ausgebaut und anschließend neu justiert werden. Bei dieser Vorgangsweise könnte auch ein mehrmaliges Ein- und Ausbauen notwendig sein, um die passende Reibung einzustellen. Wird das Scharnier hingegen nicht vollständig verbaut, ist die Verstellschraube in jeder Position des Scharniers zugänglich, was unerwünschte Verstellungen ermöglichen könnte.

Die EP 1 857 624 A1 und DE 1 559 816 A1 offenbaren weitere Scharniere.

Darüber hinaus ist aus der AT 509 093 ein andersartiges Scharnier für Flugzeugtische bekannt, bei welchem zwei Scharnierteile über zwei Schwenkbügel miteinander beweglich verbunden sind. Die Schwenkbügel sind im Wesentlichen U-förmig ausgebildet. Bei diesem Stand der Technik sind die Drehachsen der beiden Schwenkbügels jeweils ortsfest, aber versetzt zueinander angeordnet.

Vor allem wenn großflächige oder schwere Bauteile über das Scharnier verbunden sind, tritt beim Stand der Technik das Problem auf, dass das bewegliche Bauteil abrupt in die ausgeklappte Stellung fallen kann. Dies erschwert die Bedienung der Bauteile und kann sogar eine Verletzungsgefahr für den Benutzer mit sich bringen. Um dies zu vermeiden, ist es beim Stand der Technik mitunter erforderlich, das Bauteil über den gesamten Öffnungsvorgang händisch zu führen.

Demnach besteht die Aufgabe der vorliegenden Erfindung darin, die Nachteile des Standes der Technik zu lindern bzw. zu beseitigen. Die Erfindung setzt sich daher insbesondere zum Ziel, im eingebauten Zustand des Scharniers das abrupte Umklappen eines der Bauteile zu vermeiden. Insbesondere soll ein Scharnier geschaffen werden, welches auf besonders einfache Weise verstellbar ist.

Zur Lösung dieser Aufgabe sieht die Erfindung ein Scharnier mit den Merkmalen von Anspruch 1 und eine Verkleidung mit den Merkmalen von Anspruch 11 vor.

Das erste Scharnierteil weist ein Dämpfungselement auf, so dass eine Verschiebung der ersten Gelenkachse des ersten Schwenkbügels entlang der Längsführung des ersten Scharnierteils gedämpft wird.

Demnach ist das erste Scharnierteil mit einem Dämpfungselement ausgestattet, welches dazu eingerichtet ist, die Verschiebung der ersten Gelenkachse des ersten Schwenkbügels abzubremsen bzw. zu verzögern, wenn das erste Scharnierteil relativ zum zweiten Scharnierteil verschwenkt wird. Dadurch wirkt das Dämpfungselement der Verschwenkung des ersten und zweiten Scharnierteils relativ zueinander entgegen. Vorteilhafterweise kann so ein abruptes Umklappen eines der mit dem Scharnier versehenen Bauteile zuverlässig verhindert werden. Somit kann die Verschwenkung des ersten und zweiten Bauteils zwischen einer ersten Stellung und einer zweiten Stellung zueinander vergleichsweise sanft gestaltet werden. Vorzugsweise sind das erste und zweite Bauteil maximal um einen Winkel von im Wesentlichen 90° zueinander verschwenkbar.

Vorteilhafterweise kann bei dieser Ausführung des Scharniers der Abstand zwischen dem ersten Scharnierteil und dem zweiten Scharnierteil während deren Verschwenkung gering gehalten werden. Vorzugsweise sind der erste und der zweite Scharnierteil im Wesentlichen ident ausgebildet. Der erste und der zweite Schwenkbügel sind vorzugsweise ebenfalls im Wesentlichen ident ausgebildet. Der erste bzw. zweite Schwenkbügel weist bevorzugt zwei in einem Winkel, insbesondere in einem stumpfen Winkel, zueinander angeordnete Abschnitte auf. Vorzugsweise ist der erste bzw. zweite Schwenkbügel bei dieser Ausführungsform im Wesentlichen V-förmig ausgebildet.

Wenn das Dämpfungselement zumindest teilweise innerhalb einer Aussparung des ersten Scharnierteils angeordnet ist, kann das Scharnier besonders platzsparend ausgeführt werden. Dadurch kann das Scharnier bei vergleichsweise dünnwandigen Bauteilen, wie bei einem Klapptisch für Flugzeuge, eingesetzt werden. Vorzugsweise ist das Dämpfungselement im Wesentlichen vollständig in der Aussparung des ersten Scharnierteils angeordnet. Bei dieser Ausführung steht das Dämpfungselement daher nicht über die Außenflächen des ersten Scharnierteils vor. Dadurch kann das erste Scharnierteil mit dem Dämpfungselement versehen werden, ohne das Einbauvolumen des ersten Scharnierteils zu vergrößern. Bevorzugt ist das Dämpfungselement im Wesentlichen bündig mit einer der Außenflächen des ersten Scharnierteils angeordnet. Vorteilhafterweise kann so eine im Wesentlichen plane Außenseite des ersten Scharnierteils mit dem Dämpfungselement erhalten werden. Die Längsführung für die erste Gelenkachse ist bevorzugt ebenfalls in der Aussparung des ersten Scharnierteils angeordnet.

Um die Verschwenkung des ersten und zweiten Scharnierteils relativ zueinander abzubremsen, ist erfindungsgemäß der erste Schwenkbügel mit einem Bremselement verbunden, welches entlang einer Bremsfläche des Dämpfungselements verschieblich ist. Beim Verschwenken der Scharnierteile wird die erste Gelenkachse des ersten Schwenkbügels in Längsrichtung der Längsführung verschoben. Die Verschiebung der ersten Gelenkachse des ersten Schwenkbügels wird auf das Bremselement übertragen, welches über die Bremsfläche des Dämpfungselementes gleitet. Das Dämpfungselement ist vorzugsweise derart in der Aussparung des ersten Scharnierteils angeordnet, dass die Bremsfläche des Dämpfungselements gegen die Kontaktfläche des Bremselements gedrückt ist. Dadurch wird der Verschiebung des Bremselements ein Reibschluss zwischen dem Bremselement und dem Dämpfungselement entgegengesetzt, wodurch die Schwenkbewegung zwischen den Scharnierteilen gedämpft bzw. gebremst wird. Um die Reibung zwischen dem Bremselement und dem Dämpfungselement zu erhöhen, ist es günstig, wenn zumindest eine der in Richtung der Verschiebung des Bremselements erstreckten Längsseiten des Bremselements als Kontaktfläche ausgebildet ist, welche im Wesentlichen vollflächig mit der Bremsfläche des Dämpfungselements in Kontakt steht.

Vorzugsweise weist die Längsführung zwei im Wesentlichen in Längsrichtung des ersten Scharnierteils erstreckte Führungsbahnen auf, in welchen die Enden der ersten Gelenkachse des Schwenkbügels geführt sind. Die Führungsbahnen für die erste Gelenkachse des Schwenkbügels sind bevorzugt an seitlichen Begrenzungsflächen der Aussparung angeordnet, in der das Dämpfungselement aufgenommen ist.

Bevorzugt ist das Dämpfungselement aus einem vom ersten Scharnierteil verschiedenen Dämpfungsmaterial gebildet. Zur Erhöhung des Reibschlusses ist es günstig, wenn das Dämpfungsmaterial weicher als das Material des ersten Scharnierteils im Bereich der Längsführung bzw. das Material des Bremselements ist. Als Dämpfungselement ist vorzugsweise ein Kunststoff, insbesondere Polyamid oder Teflon, vorgesehen.

Zur Erhöhung der Bremskraft des Dämpfungselements ist es vorteilhaft, wenn das Dämpfungselement eine Ausnehmung aufweist, in der das Bremselement entlang zweier Bremsflächen des Dämpfungselements verschieblich ist. Bei dieser Ausführung stehen beide Längsseiten des Bremselements mit entsprechenden Bremsflächen des Dämpfungselements in Kontakt, welche die Ausnehmung für die Führung des Bremselements begrenzen. Vorzugsweise weist das Bremselement einen Plattenabschnitt mit zwei ebenen Längsseiten auf, welche entlang ebener Bremsflächen des Dämpfungselements geführt sind.

Um die Verschiebung der ersten Gelenkachse des ersten Schwenkbügels auf das Bremselement zu übertragen, ist es günstig, wenn das Bremselement mit der ersten Gelenkachse des ersten Schwenkbügels verbunden ist. Bei dieser Ausführung sitzt das Bremselement auf der ersten Gelenkachse, welche an einem Ende des ersten Schwenkbügels angeordnet ist.

Um die Bremswirkung für eine bestimmte Anwendung einstellen zu können, ist erfindungsgemäß ein Stellelement zur Einstellung eines Anpressdruckes zwischen dem Dämpfungselement und dem Bremselement vorgesehen. Durch Verstellung des Stellelements durch einen Benutzer kann der Anpressdruck zwischen der Bremsfläche des Dämpfungselements und der Kontaktfläche des Bremselements verändert werden, um die Bremswirkung beim Verschwenken der Scharnierteile zu erhöhen bzw. zu verringern.

Um das Dämpfungselement stärker oder schwächer gegen das Bremselement drücken zu können, ist es günstig, dass das Stellelement ein auf das Dämpfungselement einwirkendes Anpressteil und ein an einer Außenfläche des ersten Scharnierteils zugängliches Betätigungsteil aufweist. Zur Einstellung der Bremswirkung kann das Betätigungsteil des Stellelements in dessen Längsrichtung durch einen Benutzer verstellt werden. Je nach Stellrichtung wird der Anpressteil über den Betätigungsteil stärker oder schwächer gegen die vom Bremselement abgewandte Seite des Dämpfungselements gedrückt, wodurch der Anpressdruck zwischen dem Dämpfungselement und dem Bremselement erhöht bzw. verringert wird.

Bei einer konstruktiv einfachen, nicht erfindungsgemäßen Bauweise ist das Stellelement in einer Zugangsöffnung des ersten Scharnierteils angeordnet, welche an einer vorzugsweise im Wesentlichen in Richtung der Verschiebung der ersten Gelenkachse des ersten Schwenkbügels erstreckten Seitenfläche des ersten Scharnierteils endet. Diese Ausführung hat den Vorteil, dass das Stellelement besonders einfach ausgeführt sein kann, bringt jedoch den Nachteil mit sich, dass die Seitenfläche des ersten Scharnierteils im eingebauten Zustand des Scharniers für eine Verstellung des Stellelements nicht zugänglich ist.

Bei dieser Ausführung ist es günstig, wenn die Zugangsöffnung des ersten Scharnierteils für das Stellelement im Wesentlichen senkrecht zur Richtung der Verschiebung der ersten Gelenkachse des ersten Schwenkbügels erstreckt ist. Wenn das Betätigungsteil und das Anpressteil einteilig gebildet sind, kann ein besonders einfaches Stellelement, insbesondere eine Stellschraube, verwendet werden, welches in der Zugangsöffnung des ersten Scharnierteils angeordnet ist.

Um eine Einstellung der Bremswirkung im eingebauten Zustand des Scharniers zu ermöglichen, ist erfindungsgemäß vorgesehen, dass das Betätigungsteil des Stellelements in einem vorzugsweise im Wesentlichen in Richtung der Verschiebung der ersten Gelenkachse des ersten Schwenkbügels erstreckten Zugangsloch des ersten Scharnierteils angeordnet ist, wobei das Zugangsloch an einer dem zweiten Scharnierteil zugewandten Stirnseite des ersten Scharnierteils endet. Im eingebauten Zustand des Scharniers liegt die Stirnseite des ersten Scharnierteils am ersten Bauteils frei zugänglich vor, so dass die Dämpfungswirkung des Dämpfungselements über das Stellelement verändert werden kann, ohne das Scharnier aus den Bauteilen auszubauen.

Wenn das erste und zweite Scharnierteil in der ersten Stellung, mit im Wesentlichen parallel zueinander angeordneten Stirnseiten positioniert sind, kann vorteilhafterweise erreicht werden, dass das Zugangsloch für das Stellelement am ersten Scharnierteil durch das zweite Scharnierteil verdeckt ist. Dadurch wird eine unbeabsichtigte Verstellung der Bremswirkung in der ersten Stellung des ersten und zweiten Scharnierteils zueinander verhindert.

Bei dieser Ausführung ist es insbesondere günstig, wenn das Anpressteil in einem Winkel von vorzugsweise im Wesentlichen 90° zu dem Betätigungsteil angeordnet ist, wobei das Anpressteil bevorzugt in einer im Wesentlichen senkrecht zur Richtung der Verschiebung der ersten Gelenkachse des ersten Schwenkbügels erstreckten Öffnung des ersten Scharnierteils angeordnet ist.

Zur Kraftumlenkung zwischen dem Betätigungsteil und dem Anpressteil weisen das Betätigungsteil und das Anpressteil bevorzugt korrespondierende Konusteile auf. Demnach kann eine Verstellung des Betätigungsteils über Keilflächen der Konusteile in eine Verschiebung des Anpressteils in eine davon abweichende Richtung umgewandelt werden. Vorzugsweise ist das Betätigungsteil des Stellelements im Wesentlichen parallel zur Richtung der Verschiebung der ersten Gelenkachse des ersten Schwenkbügels und das Anpressteil im Wesentlichen senkrecht zur Richtung der Verschiebung der ersten Gelenkachse des ersten Schwenkbügels angeordnet. Bei dieser Ausführung kann das Anpressteil über das Betätigungsteil im Wesentlichen senkrecht zur Hauptebene des Dämpfungselements verstellt werden, um den Anpressdruck zwischen dem Dämpfungselement und dem Bremselement auf einfache Weise zu verändern.

Um vorteilhafterweise eine platzsparende und einfache Montage des Scharniers an dem ersten und zweiten Bauteil zu ermöglichen, weist das erste Scharnierteil an einer vorzugsweise im Wesentlichen senkrecht zur Richtung der Verschiebung der ersten Gelenkachse des ersten Schwenkbügels angeordneten Stirnseite zumindest ein Montageloch auf, in dem ein Befestigungselement, insbesondere in Form einer Schraube, zur Befestigung des ersten Scharnierteils am ersten Bauteil anordenbar ist. Dementsprechend kann das zweite Scharnierteil an einer vorzugsweise im Wesentlichen senkrecht zur Richtung der Verschiebung der zweiten Gelenkachse des zweiten Schwenkbügels angeordneten Stirnseite ebenfalls zumindest ein Montageloch zur Anordnung eines solchen Befestigungselements für die Befestigung des zweiten Scharnierteils am zweiten Bauteil aufweisen. Im eingebauten Zustand des Scharniers ist das erste bzw. zweite Scharnierteil vorzugsweise im Wesentlichen vollständig in einer korrespondierenden Aussparung des ersten bzw. zweiten Bauteils angeordnet, wobei das Befestigungselement an dem Montageloch fixiert ist, um das erste bzw. zweite Scharnierteil an dem ersten bzw. zweiten Bauteil zu verankern. Somit ist das erste bzw. zweite Scharnierteil im Wesentlichen vollständig innerhalb des ersten bzw. zweiten Bauteils montierbar, ohne die effektive Größe des ersten bzw. zweiten Bauteils zu erhöhen.

Bei einer bevorzugten Ausführung weist das zweite Scharnierteil ein weiteres Dämpfungselement zur Dämpfung einer Verschiebung der zweiten Gelenkachse des zweiten Schwenkbügels entlang der weiteren Längsführung des zweiten Scharnierteils auf. Diese Ausführung eignet sich insbesondere für einen maximalen Schwenkwinkel von im Wesentlichen 90°.

Um eine geführte Schwenkbewegung des ersten Bauteils relativ zum zweiten Bauteil zu ermöglichen und zugleich eine Annäherung des ersten Scharnierteils an das zweite Scharnierteil beim Verschwenken der Scharnierteile in eine parallel zueinander angeordnete Stellung zu bewirken, ist es günstig, wenn die zweite Gelenkachse des ersten Schwenkbügels an dem zweiten Scharnierteil und/oder die erste Gelenkachse des zweiten Schwenkbügels an dem ersten Scharnierteil im Wesentlichen ortsfest angeordnet ist. Für die Zwecke dieser Offenbarung bedeutet "ortsfest", dass die zweite Gelenkachse des ersten Schwenkbügels bzw. die erste Gelenkachse des zweiten Schwenkbügels während der Verschwenkung unverschieblich am ersten bzw. zweiten Scharnierteil angeordnet ist.

Gemäß einer besonders bevorzugten Ausführung sind der erste Schwenkbügel und der zweite Schwenkbügel über eine gemeinsame Schwenkachse miteinander verbunden, welche sich in einer parallel zueinander angeordneten Stellung des ersten Scharnierteils und zweiten Scharnierteils vorzugsweise im Wesentlichen mittig zwischen den einander zugewandten Stirnseiten des ersten Scharnierteils und zweiten Scharnierteils erstreckt. Die gemeinsame Schwenkachse ist bevorzugt durch einen Schwenkstift gebildet, welcher teils in dem ersten Schwenkbügel und teils in dem zweiten Schwenkbügel aufgenommen ist. Bevorzugt erstreckt sich die gemeinsame Schwenkachse im Wesentlichen senkrecht zur Hauptebene des ersten bzw. zweiten Schwenkbügels.

Bei einer Vorrichtung mit einem ersten Bauteil und mit einem zweiten Bauteil ist das Scharnier gemäß einer der zuvor beschriebenen Ausführungsformen vorhanden.

Die Erfindung wird nachstehend anhand von bevorzugten Ausführungsbeispielen, auf die sie jedoch nicht beschränkt sein soll, weiter erläutert. In der Zeichnung zeigt:
Fig. 1a bis 1c schematische Ansichten eines in der ausgeklappten Stellung gezeigten Flugzeugtisches, welcher in einer Seitenverkleidung des Flugzeuginnenraumes verstaubar ist, wobei die Seitenverkleidung ein Klappenelement aufweist, das über zwei erfindungsgemäße Scharniere zwischen einer aufgeklappten Stellung (Fig. 1a), einer Zwischenstellung (Fig. 1b) und einer eingeklappten Stellung (Fig. 1c) verschwenkbar ist;
Fig. 2 eine schaubildliche Ansicht eines nicht erfindungsgemäßen Scharniers mit einem ersten Scharnierteil und mit einem zweiten Scharnierteil;
Fig. 3 eine Draufsicht auf das Scharnier gemäß Fig. 2 in der parallel zueinander angeordneten zweiten Stellung der Scharnierteile;
Fig. 4 eine Ansicht der vom zweiten Scharnierteil abgewandten Rückseite des ersten Scharnierteils;
Fig. 5 eine Schnittansicht entlang der Linie V-V in Fig. 4;
Fig. 6 eine Fig. 4 entsprechende Ansicht, wobei eine Schnittlinie VII-VII eingezeichnet ist;
Fig. 7 eine Schnittansicht entlang der Linie VII-VII in Fig. 6;
Fig. 8 eine Fig. 7 entsprechende Schnittansicht einer erfindungsgemäßen Ausführungsform des Scharniers; und
Fig. 9 eine Seitenansicht des erfindungsgemäßen Scharniers, wobei die gemeinsame Schwenkachse von zwei Schwenkbügeln zwischen den Scharnierteilen ersichtlich ist.

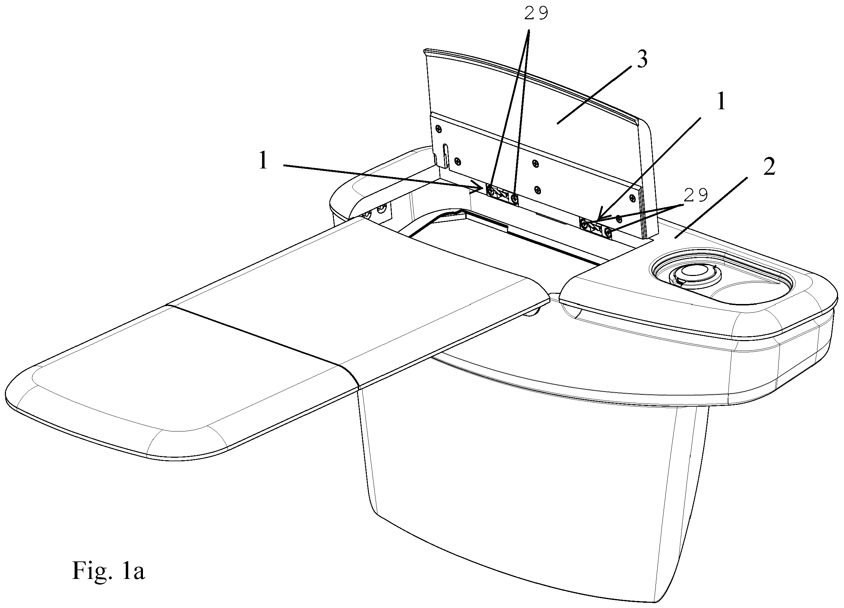

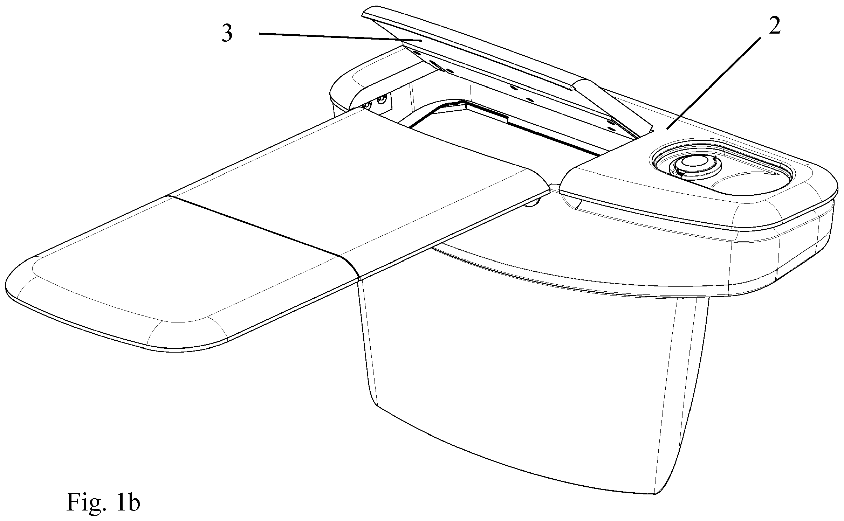

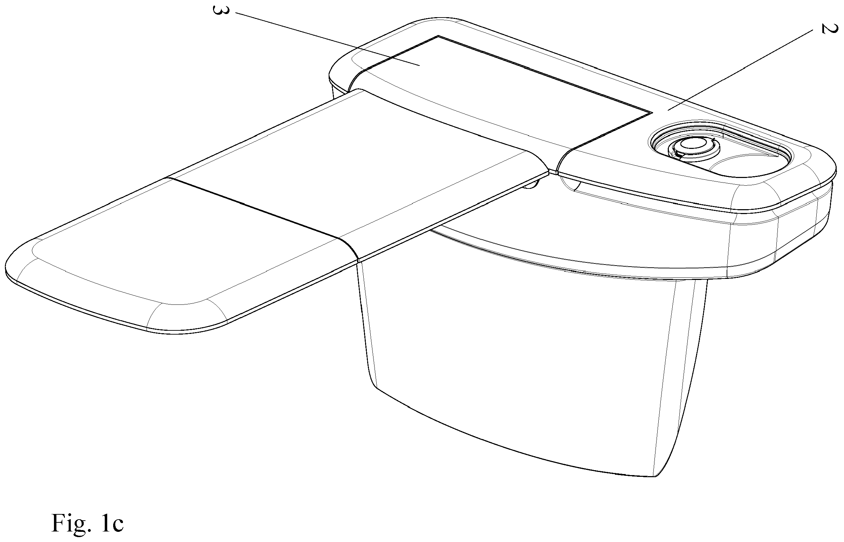

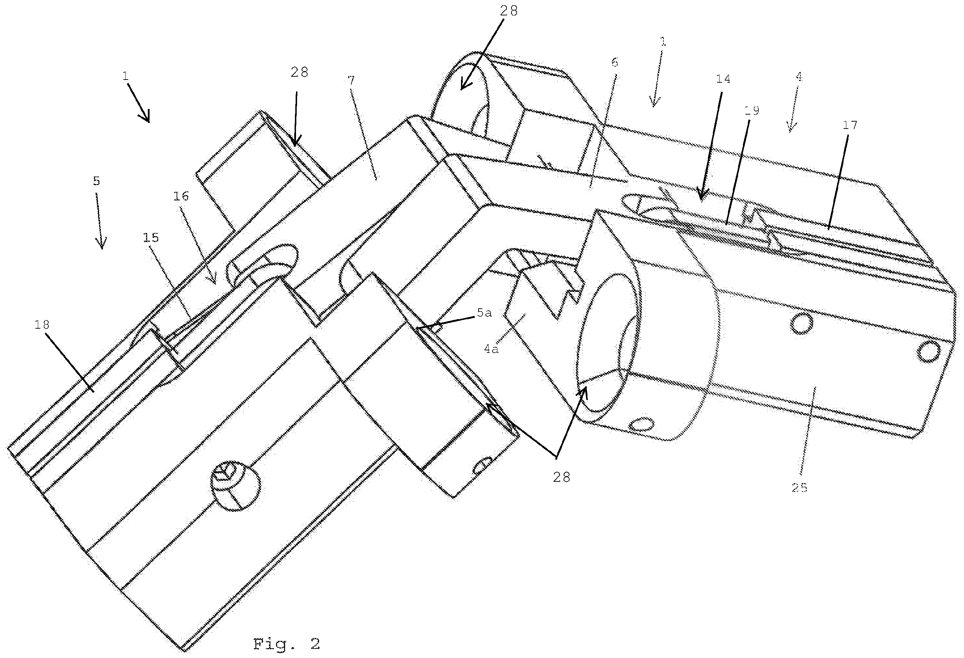

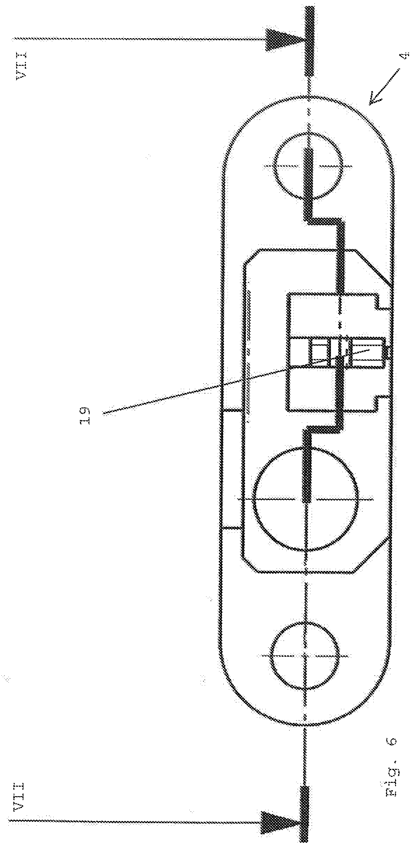

In den Fig. 2 bis 8 sind Ausführungen eines Scharniers 1 zur gelenkigen Verbindung eines ersten Bauteils 2 mit einem zweiten Bauteil 3 gezeigt. In den Fig. 1a bis 1c ist das Scharnier 1 im eingebauten Zustand an einer Seitenverkleidung im Flugzeuginnenraum ersichtlich. Die Seitenverkleidung weist ein Verkleidungselement und ein bewegliches Klappenelement auf, welche bei dieser Ausführung das erste 2 und zweite Bauteil 3 bilden. In der gezeigten Ausführung sind zwei Scharniere 1 zwischen dem Verkleidungselement und dem Klappenelement angeordnet. Mit Hilfe des Scharniers 1 kann das Klappenelement um im Wesentlichen 90° relativ zu dem Verkleidungselement verschwenkt werden. In der gezeigten Ausführung wird das Klappenelement aus einer im Wesentlichen vertikalen, aufgeklappten Stellung (Fig. 1a) über eine Zwischenstellung (Fig. 1b) in eine im Wesentlichen horizontale, eingeklappte Gebrauchsstellung (Fig. 1c) verschwenkt. In der aufgeklappten Stellung gemäß Fig. 1a kann der Flugzeugtisch im Inneren der Seitenverkleidung verstaut werden bzw. aus dem Stauraum in der Seitenverkleidung ausgezogen werden. In dieser Stellung sind die zwei Scharniere 1 ersichtlich. Im eingeklappten Zustand des Klappenelements gemäß Fig. 1c sind die Scharniere 1 verdeckt angeordnet, so dass die Scharniere 1 von außen nicht sichtbar sind. Dazu sind die Scharniere 1 im Wesentlichen vollständig innerhalb entsprechender Aussparungen des ersten Bauteils 2 bzw. des zweiten Bauteils 3 angeordnet.

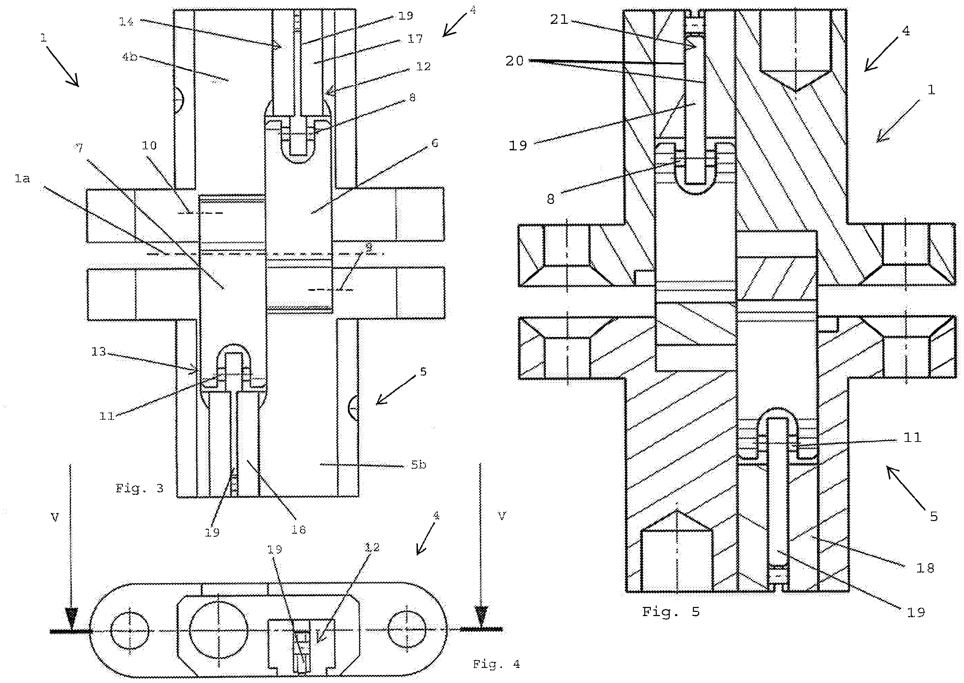

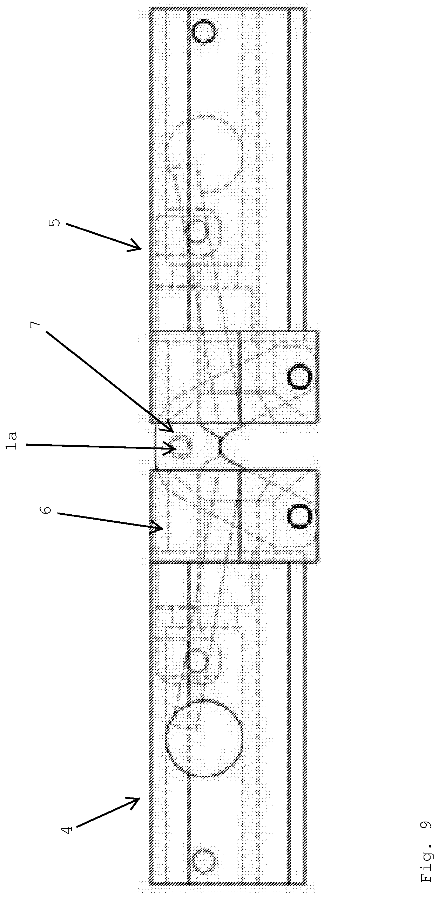

Wie aus Fig. 2 bis 8 ersichtlich, weist das Scharnier 1 ein erstes Scharnierteil 4 zur Montage innerhalb des ersten Bauteils 2 und ein zweites Scharnierteil 5 zur Befestigung an dem zweiten Bauteil 3 auf. Der erste Scharnierteil 4 und der zweite Scharnierteil 5 weisen jeweils eine plane Stirnseite 4a bzw. 5a auf, welche im montierten Zustand an entsprechenden Stirnflächen des ersten Bauteils 2 bzw. des zweiten Bauteils 3 angeordnet sind. Um das erste Scharnierteil 4 und das zweite Scharnierteil 5 platzsparend und einfach montierbar in entsprechenden Ausnehmungen des ersten Bauteils 2 bzw. des zweiten Bauteils 3 zu montieren, sind an der Stirnseite 4a des ersten Scharnierteils 4 und an der Stirnseite 5a des zweiten Scharnierteils jeweils zwei Montagelöcher 28 vorgesehen, in welchen Befestigungselemente 29, insbesondere in Form von Schrauben, zur Befestigung des ersten Scharnierteils 4 am ersten Bauteil 2 und des zweiten Scharnierteils 5 am zweiten Bauteil 3 anordenbar sind (vgl. Fig. 1a). Zur gelenkigen Verbindung der Bauteile 2, 3 miteinander weist das Scharnier 1 einen ersten Schwenkbügel 6 und einen zweiten Schwenkbügel 7 zwischen dem ersten 4 und zweiten Scharnierteil 5 auf. Der erste 6 und zweite Schwenkbügel 7 sind jeweils im Wesentlichen V-förmig ausgebildet. Der erste Schwenkbügel 6 ist über eine erste Gelenkachse 8 gelenkig mit dem ersten Scharnierteil 4 und über eine in Fig. 3 schematisch eingezeichnete zweite Gelenkachse 9 gelenkig mit dem zweiten Scharnierteil 5 verbunden. Der zweite Schwenkbügel 7 ist entsprechend ausgebildet. Demnach weist der zweite Schwenkbügel 7 eine in Fig. 3 schematisch eingezeichnete erste Gelenkachse 10 an dem ersten Scharnierteil 4 und eine zweite Gelenkachse 11 an dem zweiten Scharnierteil 5 auf. Zur Ausbildung der ersten 8 und zweiten Gelenkachse 9 des ersten Schwenkbügels 6 bzw. der ersten 10 und zweiten Gelenkachse 11 des zweiten Schwenkbügels 7 können Gelenkstifte bzw. Gelenkbolzen vorgesehen sein. Der erste Schwenkbügel 6 und der zweite Schwenkbügel 7 sind zudem über eine gemeinsame Schwenkachse 1a miteinander verbunden, welche in Fig. 3 schematisch eingezeichnet ist. Die gemeinsame Schwenkachse 1a erstreckt sich in der parallel zueinander angeordneten Stellung des ersten 4 und zweiten Scharnierteils 5, d.h. in der eingeklappten Stellung des ersten 2 und zweiten Bauteils 3, im Wesentlichen mittig zwischen den einander zugewandten Stirnseiten des ersten 4 und zweiten Scharnierteils 5. Als gemeinsame Schwenkachse 1a ist in der gezeigten Ausführung ein Schwenkstift vorgesehen, welcher in entsprechenden Ausnehmungen des ersten Schwenkbügels 6 und des zweiten Schwenkbügels 7 angeordnet ist (vgl. auch Fig. 9). Somit können das erste 4 und zweite Scharnierteil 5 von einer ersten Stellung um vorzugsweise im Wesentlichen 90° in eine zweite Stellung relativ zueinander überführt werden.

Um den Spalt zwischen dem ersten 2 und zweiten Bauteil 3 in der auseinandergeklappten Stellung möglichst gering zu halten, weist der erste Scharnierteil 4 eine Längsführung 12 auf, in der die erste Gelenkachse 8 des ersten Schwenkbügels 6 in Längsrichtung des ersten Scharnierteils 4, d.h. bezogen auf den montierten Zustand des Scharniers 1 im Wesentlichen in der Ebene des plattenförmigen ersten Bauteils 2, verschieblich ist. Die zweite Gelenkachse 9 des ersten Schwenkbügels 6 ist hingegen ortsfest gelagert, d.h. die zweite Gelenkachse 9 ist während der Verschwenkung des ersten 4 und zweiten Scharnierteils 5 gegeneinander unverschieblich angeordnet. Beim zweiten Schwenkbügel 7 ist die Anordnung der ortsfesten und der verschieblichen Gelenkachse am ersten 4 bzw. zweiten Scharnierteil 5 vertauscht. Demnach ist die erste Gelenkachse 10 des zweiten Schwenkbügels 7 an dem ersten Scharnierteil 4 im Wesentlichen ortsfest angeordnet. Der zweite Scharnierteil 5 weist hingegen eine weitere Längsführung 13 für die zweite Gelenkachse 11 des zweiten Schwenkbügels 7 auf. Zur Ausbildung der Längsführung 12 weist das erste Scharnierteil 4 eine Aussparung 14 auf, wobei an Begrenzungsflächen der Aussparung 14 im Wesentlichen in Längsrichtung des ersten Scharnierteils 4 erstreckte Führungsschlitze 15 für die Enden der ersten Gelenkachse 8 ausgebildet sind. Das zweite Scharnierteil 4 weist entsprechende Führungsschlitze 15 benachbart einer weiteren Aussparung 16 auf, in der die Enden der zweiten Gelenkachse 11 des zweiten Schwenkbügels 7 verschieblich sind.

Wie aus Fig. 2 bis 8 ersichtlich, weist das erste Scharnierteil 4 ein Dämpfungselement 17 auf, welches dazu eingerichtet ist, die Längsverschiebung der ersten Gelenkachse 8 des ersten Schwenkbügels 6 beim Verschwenken des ersten Scharnierteils 4 relativ zum zweiten Scharnierteil 5 zu dämpfen bzw. zu bremsen. Das zweite Scharnierteil 5 weist ein weiteres Dämpfungselement 18 zur Dämpfung der Verschiebung der zweiten Gelenkachse 11 des zweiten Schwenkbügels 7 entlang der weiteren Längsführung 13 des zweiten Scharnierteils 5 auf. Das weitere Dämpfungselement 18 am zweiten Scharnierteil 5 ist im Wesentlichen ident wie das Dämpfungselement 17 am ersten Scharnierteil 4 ausgebildet. Die folgenden Erläuterungen zum Dämpfungselement 17 (und den damit verbundenen Elementen) sind daher entsprechend auf das weitere Dämpfungselement 18 zu beziehen.

In der gezeigten Ausführung ist das Dämpfungselement 17 unbeweglich in der Aussparung 14 des ersten Scharnierteils 4 angeordnet. Dabei ist das Dämpfungselement 17 im Wesentlichen vollständig innerhalb der Aussparung 14 aufgenommen, wobei die Außenseite des Dämpfungselements 17 im Wesentlichen bündig mit einer Außenfläche 4b des ersten Scharnierteils 4 abschließt. Entsprechend ist die Außenseite des weiteren Dämpfungselements 18 in derselben Ebene wie die Außenfläche 5b des zweiten Scharnierteils 5 angeordnet.

Zur Dämpfung der Verschwenkung des ersten Scharnierteils 4 relativ zum zweiten Scharnierteil 5 ist der erste Schwenkbügel 6 mit einem Bremselement 19 verbunden, welches entlang einer unbeweglichen Bremsfläche 20 des Dämpfungselements 17 verschieblich ist. Zu diesem Zweck weist das Dämpfungselement 17 eine in Längsrichtung des ersten Scharnierteils 4 erstreckte Ausnehmung 21 auf, in der das Bremselement 19 aufgenommen ist. Beim Verschwenken der Scharnierteile 4, 5 gegeneinander wird das Bremselement 19 innerhalb der Ausnehmung 21 des Dämpfungselements 17 entlang der Bremsflächen 20 des Dämpfungselements 17 verschoben. Durch die Reibung zwischen dem beweglichen Bremselement 19 und den unbeweglichen Bremsflächen 20 des Dämpfungselements 17 wird die Verschiebung der ersten Gelenkachse 8 entlang der Längsführung 12 abgebremst, wodurch die Dämpfung der Schwenkbewegung des Scharniers 1 bewerkstelligt wird. Zur Erhöhung der Reibwirkung liegen die Bremsflächen 20 des Dämpfungselements 17 unter Ausübung eines Anpressdruckes an den Längsseiten des Bremselements 19 an. In der gezeigten Ausführung ist das Bremselement 19 auf der ersten Gelenkachse 8 des ersten Schwenkbügels 6 gelagert, so dass das Bremselement 19 die Verschiebung der ersten Gelenkachse 8 des ersten Schwenkbügels 6 in der Längsführung 12 mitmacht. Als Bremselement 19 ist ein Plattenteil vorgesehen, dessen Längsseiten an den Bremsflächen 20 des Dämpfungselements 19 anliegen.

Die Bremswirkung des Dämpfungselements 17 wird durch die Reibung zwischen den Bremsflächen 20 des Dämpfungselements 17 und den Längsseiten des Bremselements 19 bestimmt.

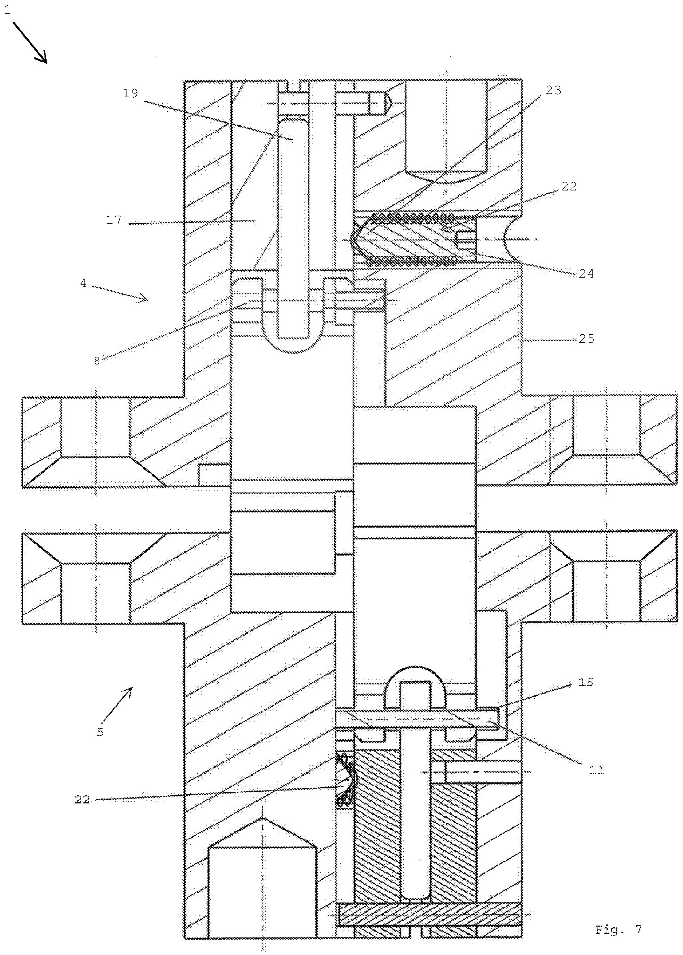

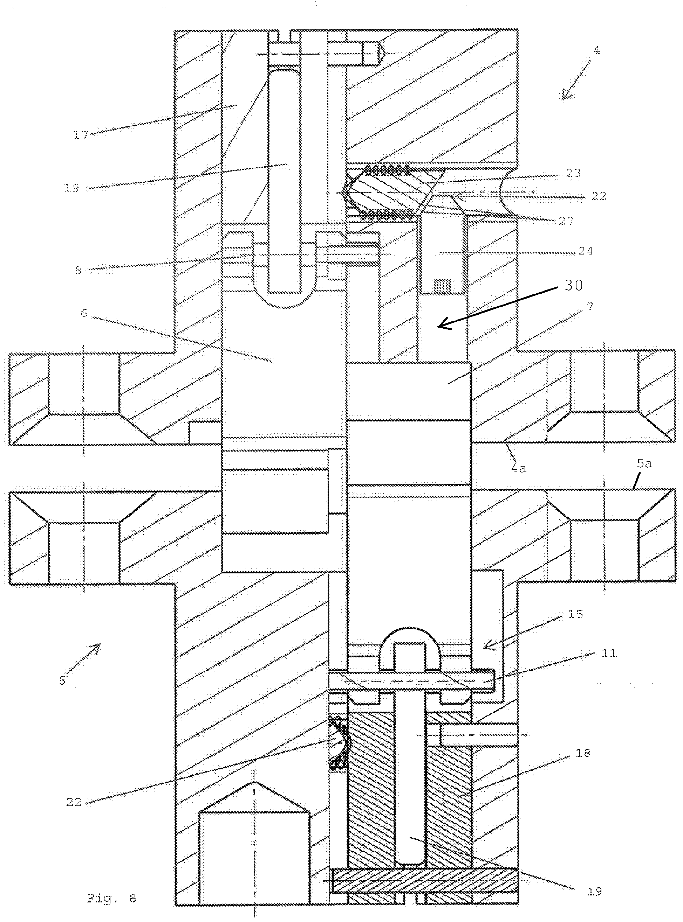

Gemäß den erfindungsgemäßen Ausführungsformen des Scharniers 1 der Fig. 7 und Fig. 8 weist das erste Scharnierteil 4 jeweils ein Stellelement 22 auf, welches zur Einstellung des Anpressdruckes zwischen dem Dämpfungselement 17 und dem Bremselement 19 eingerichtet ist. Das zweite Scharnierteil 5 weist ein entsprechendes Stellelement 22 auf. Durch das Stellelement 22 kann die Bremswirkung des Dämpfungselements 17 an die jeweilige Anwendung ermöglicht werden. Das Stellelement 22 weist ein gegen das Dämpfungselement 17 drückendes Anpressteil 23 und ein an einer Außenfläche des ersten Scharnierteils 4 freiliegendes Betätigungsteil 24 auf, welches von einem Benutzer betätigt werden kann.

Gemäß Fig. 7 sind das Anpressteil 23 und das Betätigungsteil 24 des Stellelements 22 einteilig gebildet. In der gezeigten Ausführung ist das Stellelement 22 bestehend aus dem Anpressteil 23 und dem Betätigungsteil 24 im Wesentlichen senkrecht zur Richtung der Verschiebung der ersten Gelenkachse 8 des ersten Schwenkbügels 6 angeordnet. Das Stellelement 22 ist bei dieser Ausführung durch eine Stellschraube gebildet, welche in einer Zugangsöffnung des ersten Scharnierteils 4 angeordnet ist. Die Zugangsöffnung des ersten Scharnierteils 4 endet an einer in Richtung der Verschiebung der ersten Gelenkachse 8 des ersten Schwenkbügels 6 erstreckten Seitenfläche 25 des ersten Scharnierteils 4. Durch Verstellung der Stellschraube kann der Anpressdruck des Gleitelements 17 auf das Bremselement 19 erhöht bzw. gesenkt werden.

Gemäß Fig. 8 ist das Stellelement 22 zweiteilig ausgebildet. Bei dieser Ausführung ist das Betätigungsteil 24 des Stellelements 22 über eine dem zweiten Scharnierteil 5 zugewandte Stirnseite 4a des ersten Scharnierteils zugänglich. Zu diesem Zweck weist das erste Scharnierteil 4 ein im Wesentlichen in Richtung der Verschiebung der ersten Gelenkachse 8 des ersten Schwenkbügels 6 erstrecktes Zugangsloch 30 für das Betätigungsteil 24 auf, wobei das Zugangsloch bis zur Stirnseite 4a des ersten Scharnierteils 4a reicht. Das Anpressteil 23 ist in einer Öffnung des ersten Scharnierteils 4 aufgenommen, welche sich im Wesentlichen senkrecht zur Richtung der Verschiebung der ersten Gelenkachse 8 des ersten Schwenkbügels 6 erstreckt. Diese Ausführung des Stellelements 22 hat den Vorteil, dass die Stirnseite 4a des ersten Scharnierteils 4 in der zusammengeklappten Stellung der Bauteile 2, 3 frei zugänglich ist, so dass das Stellelement 22 betätigt werden kann, ohne das Scharnier 1 ausbauen zu müssen. Bei dieser Ausführung sind das Betätigungsteil 24 und das Anpressteil 23 des Stellelements 22 in einem Winkel von im Wesentlichen 90° zueinander angeordnet. Zur Kraftübertragung vom Betätigungsteil 24 auf das Anpressteil 23 weisen das Betätigungsteil 24, insbesondere eine Stellschraube, und das Anpressteil 23 in der gezeigten Ausführung einander entsprechende Konusteile 27 auf.

## Patentansprüche

1. Scharnier (1) zur gelenkigen Verbindung eines ersten Bauteils (2) mit einem zweiten Bauteil (3), mit einem ersten Scharnierteil (4) zur Befestigung an dem ersten Bauteil (2) und mit einem zweiten Scharnierteil (5) zur Befestigung an dem zweiten Bauteil (3), mit einem ersten Schwenkbügel (6), welcher eine erste Gelenkachse (8) an dem ersten Scharnierteil (4) und eine zweite Gelenkachse (9) an dem zweiten Scharnierteil (5) aufweist, wobei der erste Scharnierteil (4) eine Längsführung (12) für die erste Gelenkachse (8) des ersten Schwenkbügels (6) aufweist, und mit einem zweiten Schwenkbügel (7), welcher eine erste Gelenkachse (10) an dem ersten Scharnierteil (4) und eine zweite Gelenkachse (11) an dem zweiten Scharnierteil (5) aufweist, wobei der zweite Scharnierteil (5) eine weitere Längsführung (13) für die zweite Gelenkachse (11) des zweiten Schwenkbügels (7) aufweist, wobei das erste Scharnierteil (4) ein Dämpfungselement (17) aufweist, so dass eine Verschiebung der ersten Gelenkachse (8) des ersten Schwenkbügels (6) entlang der Längsführung (12) des ersten Scharnierteils (4) gedämpft wird, wobei der erste Schwenkbügel (6) mit einem Bremselement (19) verbunden ist, welches entlang einer Bremsfläche (20) des Dämpfungselements (17) verschieblich ist, wobei ein Stellelement (22) zur Einstellung eines Anpressdruckes zwischen dem Dämpfungselement (17) und dem Bremselement (19) vorgesehen ist, wobei das Stellelement (22) ein auf das Dämpfungselement (17) einwirkendes Anpressteil (23) und ein an einer Außenfläche des ersten Scharnierteils (4) zugängliches Betätigungsteil (24) aufweist, **dadurch gekennzeichnet, dass** das Betätigungsteil (24) des Stellelements (22) in einem Zugangsloch (30) des ersten Scharnierteils (4) angeordnet ist, wobei das Zugangsloch (30) an einer dem zweiten Scharnierteil (5) zugewandten Stirnseite (4a) des ersten Scharnierteils (4) endet.

2. Scharnier (1) nach Anspruch 1, **dadurch gekennzeichnet, dass** das Dämpfungselement (17) zumindest teilweise innerhalb einer Aussparung (14) des ersten Scharnierteils (4) angeordnet ist.

3. Scharnier (1) nach Anspruch 1 oder 2, **dadurch gekennzeichnet, dass** das Dämpfungselement (17) eine Ausnehmung (21) aufweist, in der das Bremselement (19) entlang zweier Bremsflächen (20) des Dämpfungselements (17) verschieblich ist.

4. Scharnier (1) nach einem der Ansprüche 1 bis 3, **dadurch gekennzeichnet, dass** das Bremselement (19) auf der ersten Gelenkachse (8) des ersten Schwenkbügels (6) gelagert ist.

5. Scharnier (1) nach einem der Ansprüche 1 bis 4, **dadurch gekennzeichnet, dass** das Zugangsloch (30) für das Betätigungsteil (24) des Stellelements (22) in Richtung der Verschiebung der ersten Gelenkachse (8) des ersten Schwenkbügels (6) angeordnet ist.

6. Scharnier (1) nach einem der Ansprüche 1 bis 5, **dadurch gekennzeichnet, dass** das Anpressteil (23) in einem Winkel von vorzugsweise im Wesentlichen 90° zu dem Betätigungsteil (24) angeordnet ist, wobei das Anpressteil (23) bevorzugt in einer im Wesentlichen senkrecht zur Richtung der Verschiebung der ersten Gelenkachse (8) des ersten Schwenkbügels (6) erstreckten Öffnung des ersten Scharnierteils (4) angeordnet ist.

7. Scharnier (1) nach einem der Ansprüche 1 bis 6, **dadurch gekennzeichnet, dass** das Betätigungsteil (24) und das Anpressteil (23) zur Kraftumlenkung zwischen dem Betätigungsteil (24) und dem Anpressteil (23) Konusteile (27) aufweisen.

8. Scharnier (1) nach einem der Ansprüche 1 bis 7, **dadurch gekennzeichnet, dass** das zweite Scharnierteil (5) ein weiteres Dämpfungselement (18) zur Dämpfung einer Verschiebung der zweiten Gelenkachse (11) des zweiten Schwenkbügels (7) entlang der weiteren Längsführung (13) des zweiten Scharnierteils (5) aufweist.

9. Scharnier (1) nach einem der Ansprüche 1 bis 8, **dadurch gekennzeichnet, dass** die zweite Gelenkachse (9) des ersten Schwenkbügels (6) an dem zweiten Scharnierteil (5) und/oder die erste Gelenkachse (10) des zweiten Schwenkbügels (7) an dem ersten Scharnierteil (4) im Wesentlichen ortsfest angeordnet ist.

10. Scharnier (1) nach einem der Ansprüche 1 bis 9, **dadurch gekennzeichnet, dass** der erste Schwenkbügel (6) und der zweite Schwenkbügel (7) über eine gemeinsame Schwenkachse (1a) miteinander verbunden sind, welche sich in einer parallel zueinander angeordneten Stellung des ersten Scharnierteils (4) und zweiten Scharnierteils (5) vorzugsweise im Wesentlichen mittig zwischen den einander zugewandten Stirnseiten des ersten Scharnierteils (4) und zweiten Scharnierteils (5) erstreckt.

11. Verkleidung für einen Flugzeuginnenraum, mit einem Verkleidungselement und mit einem Klappenelement, welche über ein Scharnier (1) miteinander verbunden sind, **dadurch gekennzeichnet, dass** das Scharnier (1) nach einem der Ansprüche 1 bis 10 ausgebildet ist, wobei als erstes Bauteil (2) das Verkleidungselement und als zweites Bauteil (3) das Klappenelement vorgesehen sind.

## Claims

1. Hinge (1) for articulating a first component (2) to a second component (3), comprising a first hinge part (4) for fastening to the first component (2) and comprising a second hinge part (5) for fastening to the second component (3), comprising a first pivot bracket (6) which has a first articulation pin (8) on the first hinge part (4) and a second articulation pin (9) on the second hinge part (5), the first hinge part (4) having a longitudinal guide (12) for the first articulation pin (8) of the first pivot bracket (6), and comprising a second pivot bracket (7) which has a first articulation pin (10) on the first hinge part (4) and a second articulation pin (11) on the second hinge part (5), the second hinge part (5) having a further longitudinal guide (13) for the second articulation pin (11) of the second pivot bracket (7), the first hinge part (4) having a damping element (17) such that a movement of the first articulation pin (8) of the first pivot bracket (6) along the longitudinal guide (12) of the first hinge part (4) is damped, the first pivot bracket (6) being connected to a braking element (19) which can be moved along a braking surface (20) of the damping element (17), an adjustment element (22) being provided for adjusting a contact pressure between the damping element (17) and the braking element (19), the adjustment element (22) having a pressing part (23) that acts on the damping element (17) and an actuation part (24) that is accessible on an outer surface of the first hinge part (4), **characterised in that** the actuation part (24) of the adjustment element (22) is arranged in an access hole (30) in the first hinge part (4), the access hole (30) terminating at an end face (4a) of the first hinge part (4) that faces the second hinge part (5).

2. Hinge (1) according to claim 1, **characterised in that** the damping element (17) is arranged at least in part inside a recess (14) in the first hinge part (4).

3. Hinge (1) according to either claim 1 or claim 2, **characterised in that** the damping element (17) has a cavity (21) in which the braking element (19) can move along two braking surfaces (20) of the damping element (17).

4. Hinge (1) according to any of claims 1 to 3, **characterised in that** the braking element (19) is mounted on the first articulation pin (8) of the first pivot bracket (6).

5. Hinge (1) according to any of claims 1 to 4, **characterised in that** the access hole (30) for the actuation part (24) of the adjustment element (22) is arranged in the direction of movement of the first articulation pin (8) of the first pivot bracket (6).

6. Hinge (1) according to any of claims 1 to 5, **characterised in that** the pressing part (23) is arranged at an angle of preferably substantially 90° with respect to the actuation part (24), the pressing part (23) preferably being arranged in an opening in the first hinge part (4) that extends substantially perpendicularly to the direction of movement of the first articulation pin (8) of the first pivot bracket (6).

7. Hinge (1) according to any of claims 1 to 6, **characterised in that** the actuation part (24) and the pressing part (23) have conical parts (27) for deflecting force between the actuation part (24) and the pressing part (23).

8. Hinge (1) according to any of claims 1 to 7, **characterised in that** the second hinge part (5) has a further damping element (18) for damping a movement of the second articulation pin (11) of the second pivot bracket (7) along the further longitudinal guide (13) of the second hinge part (5).

9. Hinge (1) according to any of claims 1 to 8, **characterised in that** the second articulation pin (9) of the first pivot bracket (6) is arranged on the second hinge part (5) so as to be substantially stationary and/or the first articulation pin (10) of the second pivot bracket (7) is arranged on the first hinge part (4) so as to be substantially stationary.

10. Hinge (1) according to any of claims 1 to 9, **characterised in that** the first pivot bracket (6) and the second pivot bracket (7) are interconnected via a common pivot pin (1a) which extends, in a position in which the first hinge part (4) and second hinge part (5) are arranged in parallel with one another, preferably substantially centrally between the mutually facing end faces of the first hinge part (4) and second hinge part (5).

11. Cladding for an aircraft interior, comprising a cladding element and comprising a flap element which are interconnected via a hinge (1), **characterised in that** the hinge (1) is designed according to any of claims 1 to 10, the cladding element being provided as the first component (2) and the flap element being provided as the second component (3).

## Revendications

1. Charnière (1) pour la liaison articulée d'un premier composant (2) avec un deuxième composant (3), avec une première partie de charnière (4), destinée à être fixée au premier composant (2), et avec une deuxième partie de charnière (5), destinée à être fixée au deuxième composant (3), avec un premier étrier de pivotement (6), qui comprend un premier axe d'articulation (8) au niveau de la première partie de charnière (4) et un deuxième axe d'articulation (9) au niveau de la deuxième partie de charnière (5), la première partie de charnière (4) comprenant un guidage longitudinal (12) pour le premier axe d'articulation (8) du premier étrier de pivotement (6), et avec un deuxième étrier de pivotement (7), qui comprend un premier axe d'articulation (10) au niveau de la première partie de charnière (4) et un deuxième axe d'articulation (11) au niveau de la deuxième partie de charnière (5), la deuxième partie de charnière (5) comprenant un guidage longitudinal (13) supplémentaire pour le deuxième axe d'articulation (11) du deuxième étrier de pivotement (7), la première partie de charnière (4) comprenant un élément d'amortissement (17) de façon à ce qu'un coulissement du premier axe d'articulation (8) du premier étrier de pivotement (6) le long du guidage longitudinal (12) de la première partie de charnière (4) soit amorti, le premier étrier de pivotement (6) étant relié à un élément de freinage (19) qui est coulissant le long d'une surface de freinage (20) de l'élément d'amortissement (17), un élément de réglage (22) étant prévu pour le réglage d'une pression entre l'élément d'amortissement (17) et l'élément de freinage (19), l'élément de réglage (22) comprenant une partie de pression (23) agissant sur l'élément d'amortissement (17) et une partie d'actionnement (24) accessible au niveau d'une surface externe de la première partie de charnière (4), **caractérisée en ce que** la partie d'actionnement (24) de l'élément de réglage (22) est disposée dans un trou d'accès (30) de la première partie de charnière (4), le trou d'accès (30) se terminant au niveau d'une face frontale (4a) de la première partie de charnière (4) orientée vers la deuxième partie de charnière (5).

2. Charnière (1) selon la revendication 1, **caractérisée en ce que** l'élément d'amortissement (17) est disposé au moins partiellement à l'intérieur d'un évidement (14) de la première partie de charnière (4).

3. Charnière (1) selon la revendication 1 ou 2, **caractérisée en ce que** l'élément d'amortissement (17) comprend un évidement (21) dans lequel l'élément de freinage (19) peut coulisser le long de deux surfaces de freinage (20) de l'élément d'amortissement (17).

4. Charnière (1) selon l'une des revendications 1 à 3, **caractérisée en ce que** l'élément de freinage (19) est logé sur le premier axe d'articulation (8) du premier étrier de pivotement (6).

5. Charnière (1) selon l'une des revendications 1 à 4, **caractérisée en ce que** le trou d'accès (30) pour la partie d'actionnement (24) de l'élément de réglage (22) est disposé en direction du coulissement du premier axe d'articulation (8) du premier étrier de pivotement (6).

6. Charnière (1) selon l'une des revendications 1 à 5, **caractérisée en ce que** la partie de pression (23) est disposée de façon à former un angle de préférence globalement de 90° par rapport à la partie d'actionnement (24), de préférence la partie de pression (23) étant disposée dans une ouverture de la première partie de charnière (4) s'étendant de manière globalement perpendiculaire à la direction du coulissement du premier axe d'articulation (8) du premier étrier de pivotement (6).

7. Charnière (1) selon l'une des revendications 1 à 6, **caractérisée en ce que** la partie d'actionnement (24) et la partie de pression (23) comprennent des parties coniques (27) pour la déviation des forces entre la partie d'actionnement (24) et la partie de pression (23).

8. Charnière (1) selon l'une des revendications 1 à 7, **caractérisée en ce que** la deuxième partie de charnière (5) comprend un élément d'amortissement (18) supplémentaire pour l'amortissement d'un coulissement du deuxième axe d'articulation (11) du deuxième étrier de pivotement (7) le long du guidage longitudinal supplémentaire (13) de la deuxième partie de charnière (5).

9. Charnière (1) selon l'une des revendications 1 à 8, **caractérisée en ce que** le deuxième axe d'articulation (9) du premier étrier de pivotement (6) est disposé de manière globalement fixe au niveau de la deuxième partie de charnière (5) et/ou le premier axe d'articulation (10) du deuxième étrier de pivotement (7) est disposé de manière globalement fixe au niveau de la première partie de charnière (4).

10. Charnière (1) selon l'une des revendications 1 à 9, **caractérisée en ce que** le premier étrier de pivotement (6) et le deuxième étrier de pivotement (7) sont reliés entre eux par l'intermédiaire d'un axe de pivotement commun (1a), qui s'étend dans une position parallèle de la première partie de charnière (4) et de la deuxième partie de charnière (5) de préférence globalement au centre entre les faces frontales, orientées l'une vers l'autre, de la première partie de charnière (4) et de la deuxième partie de charnière (5).

11. Carénage pour un espace intérieur d'avion, avec un élément de carénage et avec un élément de clapet, qui sont reliés entre eux par l'intermédiaire d'une charnière (1) **caractérisé en ce que** la charnière (1) est conçue selon l'une des revendications 1 à 10, le premier composant (2) étant l'élément de carénage et le deuxième composant (3) étant l'élément de clapet.
